# EUROPEAN PATENT SPECIFICATION

(11) **EP 4 218 661 B1**
(45) Date of publication and mention of the grant of the patent: **16.07.2025**
(21) Application number: 21872728.7
(22) Date of filing: 20.08.2021
(51) Int. Cl.: A61C 8/00

(54) **IMPLANT ASSEMBLY**
IMPLANTATANORDNUNG
ENSEMBLE IMPLANT

(30) Priority: 22.09.2020 KR 20200122454
(43) Date of publication of application: 02.08.2023
(73) Proprietor: Kim, Jung-Hwan, Yangsan-si, Gyeongsangnam-do 50633 (KR)
(72) Inventor: Kim, Jung-Hwan, Yangsan-si, Gyeongsangnam-do 50633 (KR)
(74) Representative: Valet Patent Services Limited
(86) International application number: PCT/KR2021/011126
(87) International publication number: WO 2022/065698

(56) References cited:
- KR-A- 20140 088 301
- KR-A- 20160 029 875
- KR-B1- 101 459 909
- KR-B1- 101 509 643
- KR-B1- 101 543 546
- KR-B1- 101 924 802
- KR-U- 20130 006 826
- US-A1- 2018 064 512
- US-A1- 2018 338 818

## Description

### Technical Field

The present invention relates to an implant assembly, and more particularly, to an implant assembly having an abutment that enables the accurate fabrication of a crown link, such as enabling accurate and easy coupling with a crown or a crown link having a crown.

### Background Art

Korean Patent Application Publication No. 10-2015-0036467 may be cited as a preceding patent document regarding an abutment for an implant and peripheral parts related thereto. FIG. 1 shows an abutment 20 that is proposed in the preceding patent document. A flat peripheral top surface 18 is formed on the outer circumference of the abutment 20 that is proposed in the preceding patent document. A part of the flat top surface 18 is utilized as a part for supporting a crown. US2018338818A1 discloses a base for a dental implant system which includes a long cavity which optionally reaches below the implant top and/or allows a significant portion of a superstructure to be inserted into the cavity and possibly held using axial support.

### Disclosure

### Technical Problem

However, according to the structure of the preceding patent document, disadvantages may arise in that the structure for supporting a crown is complicated and considerable inconvenience is caused in the process of coupling a crown or a part having a crown to the abutment (20). In addition, there is a concern that it may be difficult to perform accurate dimension control even in the manufacture of the part related to a crown and coupled to the abutment.

An object of the present invention is to provide an abutment assembly that can be easily fastened with a crown or a member having a crown thereon in relation to the coupling (fastening) of the crown.

Another object of the present invention is to provide an abutment assembly that enables the accurate dimension control of a crown or a crown-related part that is coupled to an abutment.

Another object of the present invention may be considered to provide a structure that enables an abutment to be easily fixed to a fixture.

### Technical Solution

An implant assembly according to the present invention includes: an abutment provided with a fastening depression that is formed in the center thereof and a top inclined surface that increases outward from the top end of the fastening depression, and configured to be fixed to the upper portion of a fixture that is fixed to the alveolar bone; and a crown link provided with a bottom inclined surface that comes into contact with the top inclined surface of the abutment on the bottom thereof, and also provided with a crown support portion that supports a crown in the upper portion thereof. Furthermore, when the crown link is placed on the abutment, the top inclined surface and the bottom inclined surface are coupled to each other, and also the through hole of the crown link and the fastening depression of the abutment are coaxially aligned with each other, characterized in that a link coupling portion formed at an entrance of the fastening depression comprises hexagonal portions provided with shapes of respective corners of a hexagon and arc portions formed to move outward between the hexagonal portions, and wherein a female screw portion configured for screw coupling with a fastening screw is formed on a lower portion of the fastening depression, and a plurality of driver grooves are formed in vertical directions through the female screw section. Accordingly, they may be more easily coupled to each other using a fastening screw.

According to another embodiment of the present invention, a crown is integrated with the crown support portion of the crown link.

### Advantageous Effects

According to the present invention having the above-described configuration, when the top inclined surface of the abutment and the bottom inclined surface of the crown link are coupled to each other, the fastening depression of the abutment and the through hole of the crown link are substantially aligned with each other. Accordingly, it will be possible to expect an operational effect in which the abutment and the crown link can be more easily fastened and fixed to each other using the fastening screw.

Furthermore, the link coupling portion formed at the entrance of the fastening depression according to the present invention has both the hexagonal portions and the arc portions, so that the shape of the lower end protrusion of the crown link can accommodate both hexagonal and cylindrical shapes, which are different shapes. The female screw portion for screw coupling with the fastening screw is formed on the lower portion of the fastening depression, and the plurality of driver grooves are formed in the vertical directions through the female screw portion. It can be seen that the plant assembly is configured to facilitate the fixation of the abutment to the fixture as well as the coupling of the fastening screw. In addition, the crown may be integrated with the crown support portion of the crown link, so that it is expected that a simple configuration can be achieved as a whole.

### Description of Drawings

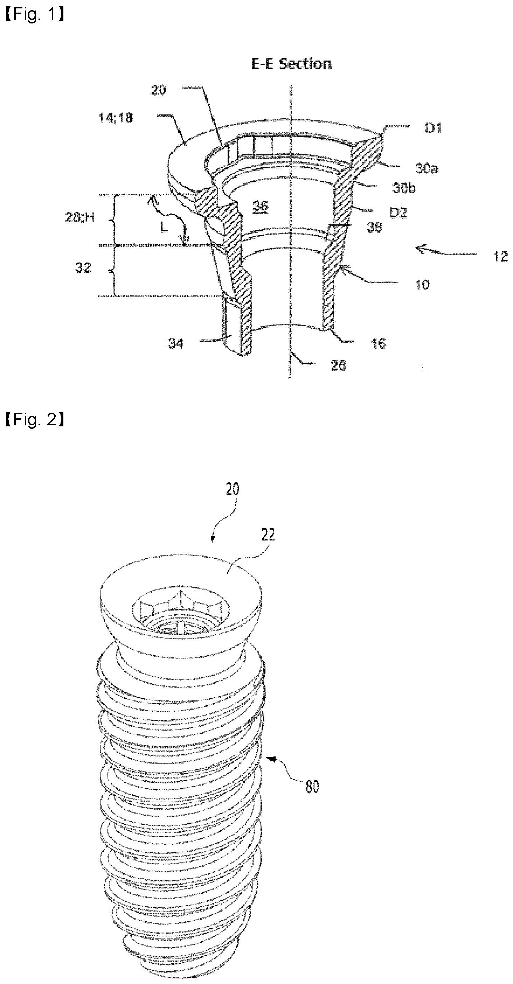

FIG. 1 is a view illustrating an example of a conventional implant;
FIG. 1 is an exemplary perspective view of the assembled state of an implant assembly of the present invention;
FIG. 3 is a perspective view of a state in which a part of the implant assembly of the present invention is cut away;
FIG. 4 is a view illustrating a coupled state of the implant assembly of the present invention;
FIG. 5 is a partially cutaway perspective view of an abutment according to the present invention;
FIG. 6 is an exemplary plan view of the abutment according to the present invention;
FIG. 7 is an exemplary diagram of a crown link according to the present invention; and
FIG. 8 is an exemplary view showing a crown that can be applied to the implant assembly according to the present invention.

### Mode for Invention

The present invention will be described in more detail below based on the embodiments that are shown in the drawings.

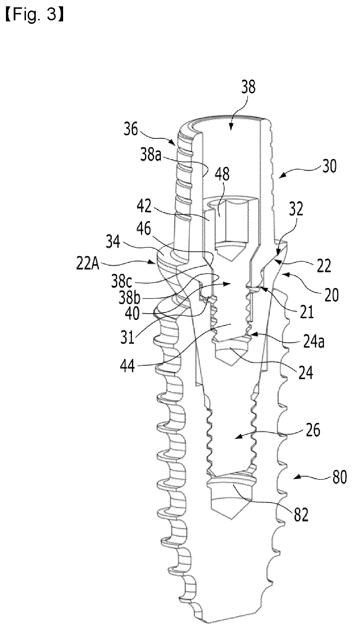

As shown in FIG. 2, an abutment 20 is coupled to the upper portion of a fixture 80 fixed to the alveolar bone, and the top surface of the abutment 20 is formed as an inclined surface 22, as shown in the drawing. In the present invention, the "top inclined surface 22" of the abutment 20 is defined as an inclined surface formed such that the outer side thereof is high and the inner side thereof is low. Furthermore, as shown in FIG. 3, the top inclined surface 22 of the abutment 20 may also be considered to correspond to the bottom inclined surface 32 of a crown link 30.

In other words, the bottom portion of the crown link 30 coupled to the top portion of the abutment 20 is provided with a bottom inclined surface 32 corresponding to the top inclined surface 22 described above, so that they can be coupled to each other while coming into close contact with each other. The crown link 30 is intended to substantially support a crown. For example, a crown is formed on the crown support portion 36 extending upward on a flange 34 protruding outward to form the bottom inclined surface 32. Furthermore, it can be seen that the bottom inclined surface 32 described above is formed on the bottom surface of the flange 34 protruding outward.

As described above, the top inclined surface 22 formed on the top surface of the abutment 20 is formed such that the center thereof is lower, and the bottom inclined surface 32 of the crown link 30 coupled to the top inclined surface 22 is also formed such that the center thereof is low and the outside thereof is high. Accordingly, the top inclined surface 22 and the bottom inclined surface 32 may be coupled to each other in close contact with each other. When the top inclined surface 22 and the bottom inclined surface 32 are coupled to each other, the relative positions of the abutment 20 and the crown link 30 are substantially accurately set.

In this case, the fact that the relative positions of the abutment 20 and the crown link 30 are substantially accurately set means that the through-hole lower portion 38b of the crown link 30 and a fastening depression 24 formed in the center of the abutment 20 are naturally arranged in the state of mating with each other, as shown in FIG. 3. Accordingly, it is expected that there will be an advantage in that the fastening of the crown link 30 and the abutment 20 can be considerably easily achieved using a fastening screw 40.

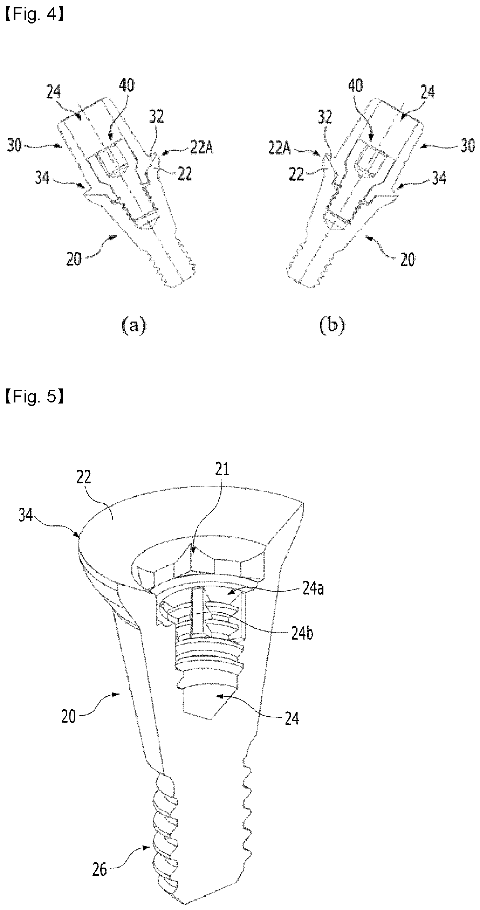

FIG. 4 shows a coupling relationship between the abutment 20 and the crown link 30 having the top inclined surface 22 and the bottom inclined surface 32, respectively, as described above. As shown in the drawing, even in the inclined state shown in FIG. 4(a) or in the inclined state shown in FIG. 4(b), the abutment 20 and the crown link 30 may be accurately aligned with each other substantially by the top inclined surface 22 and the bottom inclined surface 32. In this case, being accurate arranged means that when the crown link 30 is placed on the abutment 20, the top inclined surface 22 and the bottom inclined surface 32 are coupled to each other, and thus the through hole 38 of the crown link 30 and the fastening depression 24 of the abutment 20 are arranged coaxially. Accordingly, the crown link 30 and the abutment 20 may be considerably easily fastened to each other by using the fastening screw 40. For example, it can readily be understood that, when it is assumed that the above-described inclined surfaces 22 and 32 are not present and the contact surfaces of the crown link 30 and the abutment 20 are flat surfaces, there is considerable difficulty in mating the through-hole lower portion 38b of the crown link 30 and the fastening depression 24 of the abutment 20 with each other.

As shown in FIGS. 3 and 4, a lower screw portion 26 formed on the lower end of the abutment 20 is screwed into the screw hole 82 of the fixture 80 with an open top. Furthermore, the fastening depression 24 with an open top is formed in the center of the top inclined surface 22 of the abutment 20. A female screw portion 24a is formed at the lower end of the fastening depression 24. The female screw portion 24a is a portion that is screwed over a male screw portion 44 formed at the lower end of the fastening screw 40. In this case, the fastening screw 40 is intended to fasten and fix the crown link 30 to the abutment 20.

In addition, a plurality of driver grooves 24b are formed in the female screw portion 24a in the vertical directions. These driver grooves 24b allow a tool, such as a screwdriver, to be inserted and rotate the abutment 20 for the purpose of fastening when the abutment 20 is fixed to the fixture 80. By these driver grooves 24b, the abutment 20 may be fastened and fixed to the fixture 80 in a sufficiently firm state.

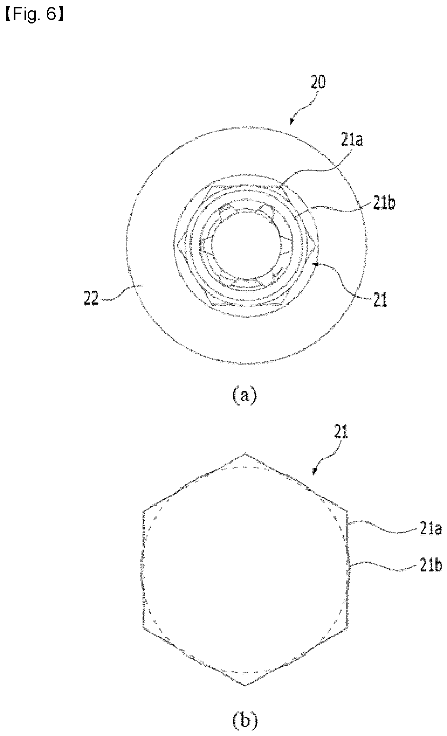

As can be seen with reference to FIGS. 5 and 6, a link coupling portion 21 into which a lower end protrusion 31 formed at the lower end of the crown link 30 is fitted and coupled is formed at the upper end (the entry) of the fastening depression 24 immediately inside the top inclined surface 22. In other words, the fastening depression 24 formed in the upper portion of the abutment 30 is intended to couple the crown link 30 to the upper portion of the abutment 30 by using the fastening screw 40. Upon coupling, the lower coupling protrusion 31 of the crown link 30 is inserted into the link coupling portion 21 formed at the upper end of the fastening depression 24 of the abutment 20.

In this case, as regards the shapes of the fastening screw 40 and the crown link 30, the crown link 30 is formed in a tubular shape, the crown support portion 36 formed at the upper end of the crown link 30 has a relatively large diameter, and a through-hole upper portion 38a is formed on the inner surface of the crown support portion 36. The lower end protrusion 31 formed at the lower end has a relatively small diameter, and the inner surface thereof forms a through-hole lower portion 38b having a relatively small diameter. A through-hole inclined surface 38c is formed between the through-hole upper portion 38a and the through-hole lower portion 38b, and connects the through-hole upper portion 38a and the through-hole lower portion 38b to each other. The through-hole inclined surface 38c also forms a higher inclination toward the outer side of the upper part.

In addition, the fastening screw 40 is screwed into the female screw portion 24a of the fastening depression 24 of the abutment 20 in the state where it enters the through hole 38 of the crown link 30. The fastening screw 40 has a fastening screw upper portion 42, a fastening screw lower portion 44, and a fastening screw inclined surface 46 connecting the fastening screw upper portion 42 and the fastening screw lower portion 44 to each other. It can be seen that the fastening screw 40 has a shape configured to substantially come into close contact with the through hole 38 of the crown link 30, and the fastening screw lower portion 44 is formed as a male screw and screwed into the female screw portion 24a of the fastening depression 24 of the abutment 20.

When the crown link 30 is fixed to the abutment 20 by the fastening screw 40 as described above, the top inclined surface 22 of the abutment 20 and the bottom inclined surface 32 of the crown link 30 come into close contact with each other as described above. In addition, the lower end protrusion 31 of the crown link 30 remains inserted into the link coupling portion 21 forming the upper portion of the fastening depression 24 of the abutment 20.

In this case, embodiments of the link coupling portion 21 formed on the upper portion of the abutment 20 and the lower end protrusion 31 of the lower end portion of the crown link 30 coupled to the link coupling portion 21 are described below. FIG. 6(a) is a plan view of the abutment 20, and FIG. 6(b) is an exemplary view helping the understanding of the fastening depression 24. As shown in FIG. 6, the link coupling portion 21 is a portion that substantially forms the entrance (upper portion) of the fastening depression 24 of the abutment 20, and the lower end protrusion 31 of the crown link 30 is inserted in the link coupling portion 21 as described above.

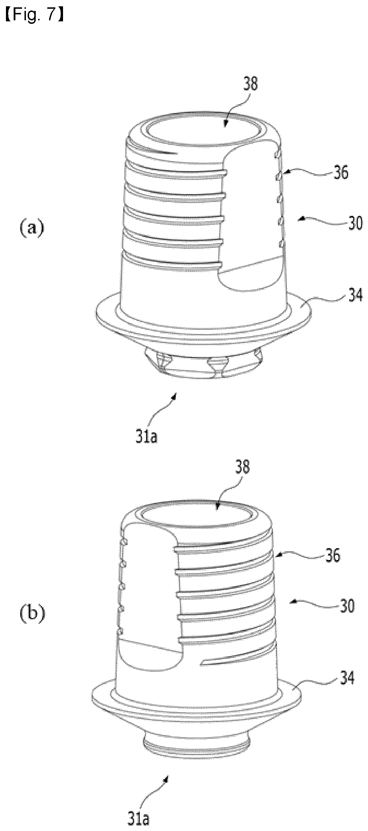

The lower end portion of the crown link 30 may have two forms, as shown in FIG. 7. The lower end protrusion 31a shown in FIG. 6(a) is a protrusion having a hexagonal shape and is applied to the case of a single crown, and the lower end protrusion 31b shown in FIG. 6(b) is a protrusion having a cylindrical shape and may be applied to a case where a plurality of crowns are bridged to each other. According to the present invention, the link coupling portion 21, which is the entrance of the fastening depression 24 of the abutment 20, is configured to accommodate both the hexagonal lower end protrusion 31a shown in FIG. 6(a) and the cylindrical lower end protrusion 31b shown in FIG. 6(b).

As can be seen with reference to of FIGS. 6(a) and 6(b), the link coupling portion 21 has hexagonal portions 21a having partial outer shapes for respective corners of a hexagon and arc portions 21b formed such that one circle partially passes outward through all sides of the hexagon. These arc portions 21a may be substantially extended in an arc shape outward through the individual sides of the hexagon along one circle.

According to the link coupling portion 21 having the above shape, the hexagonal lower end protrusion 31a shown in FIG. 7(a) may be fitted into the hexagonal portions 21a of the link coupling portion 21, and the cylindrical lower end protrusion 31b shown in FIG. 7(b) may be fitted into the arc portions 21b of the link coupling portion 21. For reference, in order to prevent a crown coupled to the upper portion of the link coupling portion 21 from being arbitrarily rotated, a part of the crown support portion 36 has a flat shape.

Furthermore, as can be seen in FIGS. 2 and 3, the abutment 20 is configured to protrude upward at a predetermined height in the state of being fixed to the fixture 80. In other words, the upper portion 22A of the abutment 20 on which the above-described top inclined surface 22 is formed protrudes outward (radially), so that it can be considered to have a predetermined height with respect to the fixture 80. The reason for this is that it is designed to have various dimensions according to the height of the gums of a patient to be treated.

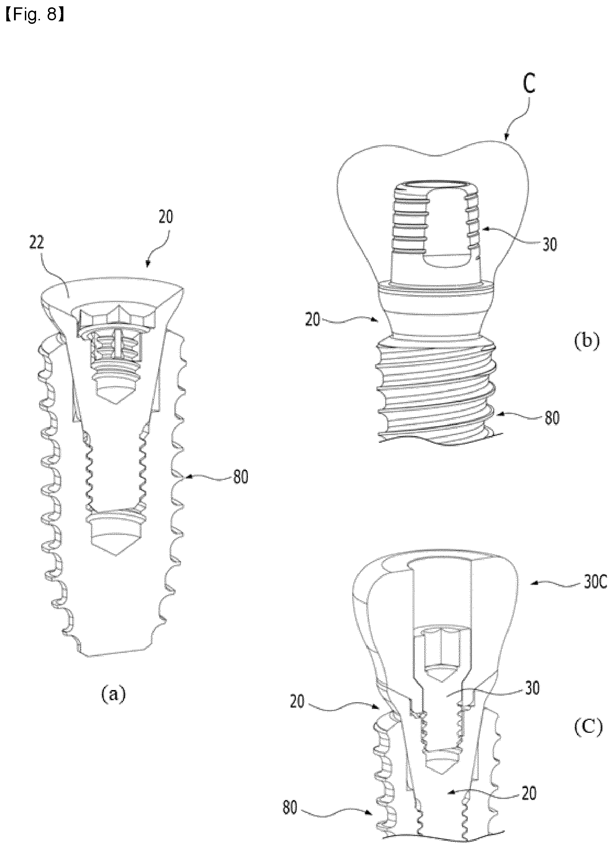

Next, another embodiment of the present invention will be described with reference to FIG. 8. FIG. 8(a) shows an assembly of the abutment 20 and the fixture 80 described above, FIG. 8(b) shows an embodiment in which a crown C is placed on the crown link 30 assembled on the top of the abutment 20, and FIG. 8(c) shows an embodiment in which the crown link is modified. In the embodiment shown in FIG. 8(b), it can be seen that the crown C is coupled to the crown support portion 36 of the crown link 30 in the above-described embodiment.

According to the embodiment shown in FIG. 8(c), it can be seen that a crown is integrated with a crown link 30C. As described above, it can be seen that it is also possible to form a crown directly on the top of the crown link 30C fixed on the top of the abutment 20 by a fastening screw 40. In this embodiment, it is natural that in the crown link 30C of the present embodiment, portions for systematic connection with the fastening screw 40 and the abutment 20 have substantially the same structures and connection relationships as described above, except for the crown formed on the top.

## Claims

1. An implant assembly comprising:
an abutment (20) provided with a fastening depression (24) that is formed in a center thereof and a top inclined surface (22) that increases outward from a top end of the fastening depression (24), and configured to be fixed to an upper portion of a fixture (80) that is fixed to an alveolar bone; and
a crown link (30) provided with a bottom inclined surface (32) that comes into contact with the top inclined surface (22) of the abutment (20) on a bottom thereof, and also provided with a crown support portion (36) that supports a crown in an upper portion thereof;
wherein, when the crown link (30) is placed on the abutment (20), the top inclined surface (22) and the bottom inclined surface (32) are coupled to each other, and also a through hole (38) of the crown link (30) and the fastening depression (24) of the abutment (20) are coaxially aligned with each other,
**characterized in that** a link coupling portion (21) formed at an entrance of the fastening depression (24) comprises hexagonal portions (21a) provided with shapes of respective corners of a hexagon and arc portions (21b) formed to move outward between the hexagonal portions (21a), and
wherein a female screw portion (24a) configured for screw coupling with a fastening screw (40) is formed on a lower portion of the fastening depression (24), and a plurality of driver grooves (24b) are formed in vertical directions through the female screw section (24a).

2. The implant assembly of claim 1, wherein a crown is integrated with the crown support portion (36) of the crown link (30).

## Patentansprüche

1. Implantatanordnung, die umfasst:
ein Abutment (20), das mit einer Befestigungsvertiefung (24), die in dessen Mitte ausgebildet ist, und einer oberen geneigten Fläche (22) versehen ist, die sich von einem oberen Ende der Befestigungsvertiefung (24) nach außen erstreckt, und das so konfiguriert ist, dass es an einem oberen Abschnitt einer Befestigung (80) befestigt werden kann, die an einem Alveolarknochen befestigt ist; und
ein Kronenverbindungsstück (30), das mit einer unteren geneigten Fläche (32) versehen ist, die an ihrer Unterseite mit der oberen geneigten Fläche (22) des Abutments (20) in Kontakt kommt, und das ferner mit einem Kronenstützabschnitt (36) versehen ist, der eine Krone in seinem oberen Abschnitt stützt;
wobei, wenn das Kronenverbindungsstück (30) auf dem Abutment (20) platziert ist, die obere geneigte Fläche (22) und die untere geneigte Fläche (32) miteinander gekoppelt sind, und ferner ein Durchgangsloch (38) des Kronenverbindungsstücks (30) und die Befestigungsvertiefung (24) des Abutments (20) koaxial zueinander ausgerichtet sind,
**dadurch gekennzeichnet, dass** ein Verbindungsstückabschnitt (21), der an einem Eingang der Befestigungsvertiefung (24) ausgebildet ist, sechseckige Abschnitte (21a), die mit Formen der jeweiligen Ecken eines Sechsecks versehen sind, und Bogenabschnitte (21b) umfasst, die so ausgebildet sind, dass sie sich zwischen den sechseckigen Abschnitten (21a) nach außen bewegen, und
wobei ein weiblicher Schraubabschnitt (24a), der für eine Schraubverbindung mit einer Befestigungsschraube (40) konfiguriert ist, an einem unteren Abschnitt der Befestigungsvertiefung (24) ausgebildet ist, und eine Vielzahl von Antriebsnuten (24b) in vertikaler Richtung durch den weiblichen Schraubabschnitt (24a) hindurch ausgebildet ist.

2. Implantatanordnung nach Anspruch 1, wobei eine Krone mit dem Kronenstützabschnitt (36) des Kronenverbindungsstücks (30) integriert ist.

## Revendications

1. Ensemble d'implant comprenant :
une butée (20) pourvue d'un évidement de fixation (24) qui est formé au centre de celle-ci et d'une surface inclinée supérieure (22) qui augmente vers l'extérieur à partir d'une extrémité supérieure de l'évidement de fixation (24), et configurée pour être fixée à une partie supérieure d'un appareil (80) qui est fixé à un os alvéolaire ; et
une liaison en couronne (30) pourvue d'une surface inclinée inférieure (32) qui entre en contact avec la surface inclinée supérieure (22) de la butée (20) sur un fond de celle-ci, et également pourvue d'une partie de support de couronne (36) qui supporte une couronne dans une partie supérieure de celle-ci ;
dans lequel, lorsque la liaison en couronne (30) est placée sur la butée (20), la surface inclinée supérieure (22) et la surface inclinée inférieure (32) sont accouplées l'une à l'autre, et un trou traversant (38) de la liaison en couronne (30) et l'évidement de fixation (24) de la butée (20) sont également alignés coaxialement l'un par rapport à l'autre,
**caractérisé en ce qu'**une partie d'accouplement de liaison (21) formée à une entrée de l'évidement de fixation (24) comprend des parties hexagonales (21a) pourvues de formes de coins respectifs d'un hexagone et de parties d'arc (21b) formées pour se déplacer vers l'extérieur entre les parties hexagonales (21a), et
dans lequel une partie de vis femelle (24a) configurée pour un accouplement à vis avec une vis de fixation (40) est formée sur une partie inférieure de l'évidement de fixation (24), et une pluralité de rainures d'entraînement (24b) sont formées dans des directions verticales à travers la section de vis femelle (24a).

2. Ensemble d'implant selon la revendication 1, dans lequel une couronne est intégrée à la partie de support de couronne (36) de la liaison en couronne (30).
